# EUROPÄISCHE PATENTSCHRIFT

(11) **EP 1 284 239 B1**
(45) Veröffentlichungstag und Bekanntmachung des Hinweises auf die Patenterteilung: **25.10.2006**
(21) Anmeldenummer: 02013215.5
(22) Anmeldetag: 15.06.2002
(51) Int. Cl.: C02F 1/48, C02F 1/46

(54) **Gerät zur elektrophysikalischen Wasserbehandlung**
Apparatus for electrophysical water treatment
Appareil pour le traitement électrophysique de l eau

(30) Priorität: 13.08.2001 DE 10138625
(43) Veröffentlichungstag der Anmeldung: 19.02.2003
(73) Patentinhaber: HANS SASSERATH & CO KG, 41352 Korschenbroich (DE)
(72) Erfinder:
(74) Vertreter: Weisse, Renate

(56) Entgegenhaltungen:
- EP-A- 1 076 038
- DE-A- 19 606 979

## Beschreibung

### Technisches Gebiet

Die Erfindung betrifft ein Gerät zur Wasserbehandlung mittels eines elektrischen Feldes mit Anoden- und Kathodenmitteln in einer von dem zu behandelnden Wasser durchflossenen Behandlungskammer.

Trinkwasser enthält wichtige Mineralien, unter anderem Kalzium- und Magnesiumkarbonate, die in der Summe auch als Wasserhärte bezeichnet werden. Diese Mineralien sind einerseits für die Gesundheit sehr wichtig. Sie können aber andererseits in der Trinkwasserinstallation, insbesondere bei Erwärmung, zu technischen Störungen führen.

Bei der Erwärmung, z.B. im Trinkwassererwärmer, kommt es zur Bildung von unlöslichen Kalkablagerungen, auch Kesselstein genannt. Dieser Kesselstein bildet sich auf der Warmseite der Installation. Er beeinträchtigt Wärmeübergänge. In Rohren kann Kesselstein über die Jahre zu eiem Rohrinfarkt, d.h. zu einem Verschluß in der dem Trinkwassererwärmer nachgeschalteten Rohrinstallation führen.

Um solche Kalkablagerungen zu vermeiden, ist es bekannt, eine Enthärtung des Trinkwassers vorzunehmen, bei welcher die Mineralien aus dem Trinkwasser entfernt werden. Eine solche Enthärtung ist über Ionenaustausch oder Umkehrosmose möglich.

Das vermeidet Kesselsteinbildung. Dafür wird aber in anderer Hinsicht die Qualität des Trinkwassers durch die Entfernung der an sich im Trinkwasser erwünschten Mineralien beeinträchtigt.

Es sind Verfahren zur Behandlung des Trinkwassers mittels sog. elektrophysikalischer Geräte bekannt, bei denen eine Kristallkeimbildung im Trinkwasser bewirkt werden soll. Die als Impfkristalle bezeichneten Kristallkeime werden im Trinkwasser mitgeführt. Die Konglomeration der Impfkristalle führt dann dazu, daß so behandeltes Trinkwasser weniger zu Ablagerungen in Rohren oder Heizelementen in Form von Kesselstein führt, während andererseits die Mineralien im Trinkwasser erhalten bleiben.

Die Behandlung mittels elektrophysikalischer Geräte erfolgt im wesentlichen nach folgendem Prinzip:

Im Trinkwasser ist immer ein gewisser Teil Kohlendioxid (CO₂) gelöst. Dieses Kohlendioxid bildet mit den übrigen Bestandteilen ein Reaktionsgleichgewicht, wobei Kalziumhydrogenkarbonat Ca(HCO₃)₂ aus Kalziumkarbonat CaCO₃ gebildet wird nach der Reaktionsgleichung:

CaCO₃ + H₂O +CO₂ ⇔(Ca(HCO₃)₂)

Wird das Wasser erhitzt, so entweicht CO₂ aus dem Wasser und es bildet sich Kesselstein. Man kann entsprechend der Gleichung aber auch gezielt das entsprechende Kalk-Kohlensäure-Gleichgewicht im Trinkwasser ändern.

Führt man dem Wasser Kohlensäure zu, so löst man eine Verschiebung des Gleichgewichts nach links in obiger Formel aus. Aus dem im Wasser vorliegenden Hydrogenkarbonat bilden sich Keime aus Kalziumkarbonat (Kalkübersättigung). Das weiter gebildete Kalziumkarbonat setzt sich dann vorzugsweise an den einemal entstandenen Keimen ab, d.h. die Keime "wachsen".

Diese Reaktion erfolgt in einer Behandlungskammer mit einer Kathode und einer Anode auf elektrolytischem Wege. Die Impfkristalle bilden sich an der Kathode. Die Impfkristalle müssen dann nach entsprechendem Wachstum wieder dem Trinkwasser beigemischt werden. Dann ist bereits Karbonat als Impfkristalle oder Keime im Trinkwasser vorhanden, wenn das Trinkwasser erhitzt wird. Die Impfkristalle oder Keime brauchen nicht mehr neu gebildet zu werden. Das Karbonat setzt sich dementsprechend vorwiegend an den im Wasser mitgeführten Impfkristallen oder Keimen und nicht mehr an den Installationselementen fest.

### Stand der Technik

Aus der EP 0 751096 A2 ist ein Gerät zur elektrophysikalischen Trinkwasserbehandlung mittels eines elektrischen Feldes bekannt, bei dem ein räumlich inhomogenes Feld mit einer einer Gleichspannung überlagerten Wechselspannung erzeugt wird.

Aus der EP 1 076 038 A2 ist ein Gerät zur elektrophysikalischen Trinkwasserbehandlung mittels eines elektrischen Feldes bekannt, bei dem ein räumlich inhomogenes Feld mittels einer Kathode erzeugt wird, die aus einer Vielzahl von Metallstiften besteht. Die Stifte ragen durch eine Lochplatte. Die Kristallkeime, die sich an den Stiften bilden, werden mechanisch mittels eines Motors entfernt. Dabei wird eine lange Verweildauer der Keime an den Elektroden angestrebt. Um die aus den Stiften bestehende Kathode herum ist eine Nachbehandlungskammer angeordnet, in welcher senkrechte Graphitelektroden kranzförmig angeordnet sind. Die Graphitelektroden sind im Wechsel als Anode und Kathode gepolt. Jede der Elektroden hat somit zwei entgegengesetzt gepolte Nachbarelektroden. In regelmäßigen Abständen werden die Elektroden der Nachbehandlungskammer umgepolt.

Die bekannte Anordnung ist teuer in der Herstellung. Die Stifte, die zur Erzeugung des inhomogenen Feldes erforderlich sind, müssen in Handarbeit hergestellt werden. Das "Einfädeln" der Lochplatte ist zeitaufwendig. Weiterhin setzt sich die Kathode nach einer Weile zu und muß aufwendig gereinigt werden. Hierfür muß das Gerät auseinander genommen werden, die Kathode entfernt, gereinigt und wieder eingesetzt werden. Auch dies ist aufwendig.

Es ist weiterhin ein Gerät zur elektrophysikalischen Wasserbehandlung bekannt, bei welchem eine Spannung an ein Granulat aus Graphit und Quarzsand angelegt wird. In dem Granulat werden dann die Kristallkeime gebildet. Das Granulat wirkt jedoch gleichzeitig wie ein Filter und setzt sich bei längerer Behandlungsdauer ebenfalls zu und muß ersetzt oder gewartet werden.

### Offenbarung der Erfindung

Der Erfindung liegt die Aufgabe zu Grunde, die oben genannten Nachteile zu überwinden und ein wirtschaftlicheres Gerät zur elektrophysikalischen Wasserbehandlung zu schaffen.

Erfindungsgemäß wird diese Aufgabe dadurch gelöst, daß
(a) die Behandlungskammer wenigstens ein Paar langgestreckter Hohlräume bildet, die über einen Spalt miteinander verbunden sind,
(b) die Anoden- und Kathodenmittel jeweils von einem Paar von zueinander parallelen, stabförmigen Elektroden gebildet sind, die sich im Abstand voneinander durch die langgestreckten Hohlräume erstrecken, wobei zwischen die Elektroden eine Spannung anlegbar ist, und
(c) das eine Ende des oder jedes Hohlräumes mit einem Wassereinlaß und das andere Ende des oder jedes Hohlräumes mit einem Wasserauslaß verbunden ist, wodurch eine Wasserströmung von einer Elektrode zur anderen im wesentlichen quer zur Längsachse der Elektroden erzeugbar ist.
   Die Elektroden können leicht hergestellt werden und die Anordnung wird dadurch erheblich kostengünstiger. Die Elektroden können einzeln ausgetauscht oder gewartet werden, wenn dies erforderlich ist. Die Erfindung basiert auf der überraschenden Erkenntnis, daß neben dem Kristallwachstum auch die Bildung von Kristallkeimen durch eine große Strömungsgeschwindigkeit an der Kathode gefördert wird. Ein inhomogenes Feld und eine lange Verweildauer sind demgegenüber nicht zwingend erforderlich. Durch die Strömung quer zu den Elektroden werden die Kristallkeime in ausreichendem Maß von den Elektroden abgespült und die Elektroden können sich nicht zusetzen. Auch nach längerem Gebrauch ist keine Verschmutzung oder Ablagerung innerhalb des Systems festzustellen. Ein Abschiebern der Kristallkeime über einen Motor ist nicht notwendig, da die Strömung im direkten Umfeld der Kathode eine ausreichende Kristallkeimbeimischung bewirkt.
   In einer bevorzugten Ausgestaltung der Erfindung sind wenigstens zwei Elektrodenpaare vorgesehen. Die Elektrodenpaare aus Kathode und Anode sind vorzugsweise jeweils paarweise gegen die anderen Elektrodenpaare isoliert. Dadurch können die elektrischen Felder, die sich zwischen einem Elektrodenpaar ausbilden, keinen Einfluß auf die elektrischen Felder zwischen den anderen Elektrodenpaaren ausüben.
   Vorzugsweise sind die Elektrodenpaare im wesentlichen kranzförmig angeordnet. In dem Elektrodenkranz können etwa 5 Elektrodenpaare vorgesehen sein. In einer Ausgestaltung der Erfindung sind die Elektrondenpaare in einem im wesentlichen topfförmigen Gehäuse angeordnet. Es kann ein Strömungsleitelement vorgesehen sein, in welchem sich zylinderförmige Hohlräume zur Aufnahme der Elektroden befinden. Über das Strömungsleitelement werden somit die einzelnen Behandlungskammern und die dazwischenliegende Isolierung gleichzeitig verwirklicht. Vorzugsweise sind jeweils zwei zylinderförmige Hohlräume über einen Spalt verbunden, der die beiden Hohlräume über ihre gesamte Länge verbindet. In dem Spalt kann dann das Wasser von einer Elektrode zu einer weiteren Elektrode fließen, wobei sich dort auch das elektrische Feld ausbildet. Entsprechend sind die Elektroden in den miteinander verbundenen Hohlräumen vorzugsweise jeweils entgegengesetzt gepolt.
   Für eine besonders gute Strömungsführung ist jeweils ein Hohlraum eines Hohlraumpaares über wenigstens einen Spalt mit dem Auslaß und der andere Hohlraum über wenigstens einen Spalt mit einem Einlaß der Behandlungskammer verbunden. Das Strömungsleitelement besteht vorzugsweise aus elektrisch isolierendem Material, etwa Kunststoff.
   Vorzugsweise ist das Strömungsleitelement im Spritzgußverfahren hergestellt. In einer besonders bevorzugten Ausgestaltung der Erfindung bestehen die Elektroden aus einem porösen Material mit großer Oberfläche, zum Beispiel aus Graphit. Durch die große Oberfläche können mehr Keime gebildet werden. Dadurch wird die Effizienz des Geräts weiter verbessert.
   Es können Mittel zur Umpolung der Elektroden vorgesehen sein, sowie Mittel zur Steuerung der Umpolung in regelmäßigen Zeitintervallen, zum Beispiel in Zeitintervallen zwischen 0,5 und 2 Minuten. Durch die Umpolung wird erreicht, daß alle Keime abgespült werden und der Strömungskanal sich durch gebildetes Karbonat nicht zusetzt.
   Bevorzugt werden eine Mehrzahl von Strömungsleitelementen in einem Gehäuse angeordnet. Dadurch können die Strömungsleitelemente kleiner ausgestaltet werden und sind leichter herstellbar.
   In einer vorteilhaften Ausgestaltung der Erfindung ist eine weitere Behandlungskammer mit Elektroden zur Nachbehandlung vorgesehen. Die Nachbehandlungskammer kann ringförmig um die Behandlungskammer herum angeordnet sein. In der Nachbehandlungskammer wird das Kristallwachstum gefördert. Die ringförmige Anordnung ist leicht zu fertigen und platzsparend. Bei kompakter Bauweise wird außerdem ein gleichmäßiger Fluß in alle Bereiche der Nachbehandlungskammer ermöglicht. Die Elektroden in der Nachbehandlungskammer sind vorzugsweise kranzförmig in gleichmäßigen Abständen angeordnet. Dadurch wird eine gleichmäßige Stromverteilung erzeugt. In einer weiteren Ausgestaltung der Erfindung ist das oder jedes Elektrodenpaar in einer eigenen Behandlungskammer angeordnet und jede dieser Behandlungskammern steht mit der Nachbehandlungskammer in Verbindung. In den jeweiligen Behandlungskammern kann eine erhöhte Strömung erzeugt werden. Weiterhin werden die Elektrodenpaare strömungsmäßig gegeneinander isoliert, so daß sich die Strömungen nicht gegenseitig stören. Bei gleichzeitiger elektrischer Isolierung beeinflußen sich auch die Felder nicht.
   Zwischen den Elektroden der Nachbehandlungskammer können isolierende Stifte vorgesehen sein, die parallel zu den Elektroden verlaufen. Die Stifte bewirken eine erwünschte Strömungstrennung in der Nachbehandlungskammer, sowie eine Strömungserhöhung. Die Stifte können mittels Befestigungselementen, die an das Strömungsleitelement angeformt sind, befestigt werden.
   Ausgestaltungen der Erfindung sind Gegenstand der Unteransprüche.
   Ein Ausführungsbeispiel der Erfindung ist nachstehend unter Bezugnahme auf die zugehörigen Zeichnungen näher erläutert.

### Kurze Beschreibung der Zeichnungen

- Fig.1: ist eine perspektivische Darstellung eines Gerätes zur elektophysikalischen Behandlung von Wasser
- Fig.2: ist ein Querschnitt durch das Gehäuse mit Behandlungskammern und darum angeordneter Nachbehandlungskammer
- Fig.3: ist eine perspektivische Darstellung eines Strömungsleitelements
- Fig.4: ist ein Querschnitt durch die Befestigungsanordnung der Elektroden

### Beschreibung eines Ausführungsbeispiels

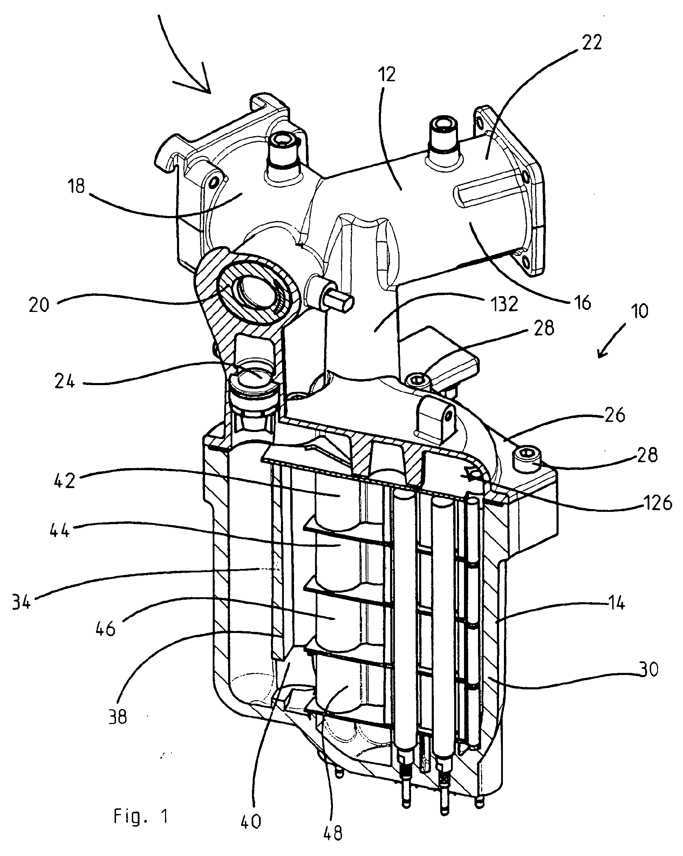

In Fig.1 ist mit 10 ein Gerät zur elektrophysikalischen Wasserbehandlung bezeichnet. Das Gerät umfasst einen Armaturenteil 12 und eine darunter angeordnete Wasserbehandlungseinheit 14. In der Wasserbehandlungseinheit 14 erfolgt eine "dynamische Behandlung" des durchfließenden Wassers mittels elektrischer Felder.

Durch diese Behandlung werden Kristallisationskeime gebildet, die im Wasser mitgeführt werden. An diesen Kristallisationskeimen kristallisiert sich der im Wasser gelöste Kalk so an, daß er in Form von kleinen Kalkkristallen vom Wasser mitgeführt wird und sich nicht an den Wandungen absetzt und zur Verkalkung führt.

In Fig.1 ist das Gerät 10 perspektivisch dargestellt. Der Armaturenteil 12 weist einen Y-förmigen Kanalkörper 16 auf. Der Kanalkörper 16 hat drei Anschlußstutzen 18, 20 und 22. Über den Anschlußstutzen 20 ist der Kanalkörper 16 mit dem Einlaß 24 der Wasserbehandlungseinheit 14 verbunden. Der Einlaß 24 ist Teil eines Deckels 26, der über Schrauben 28 mit einem topfförmigen Gehäuse 30 verbunden ist.

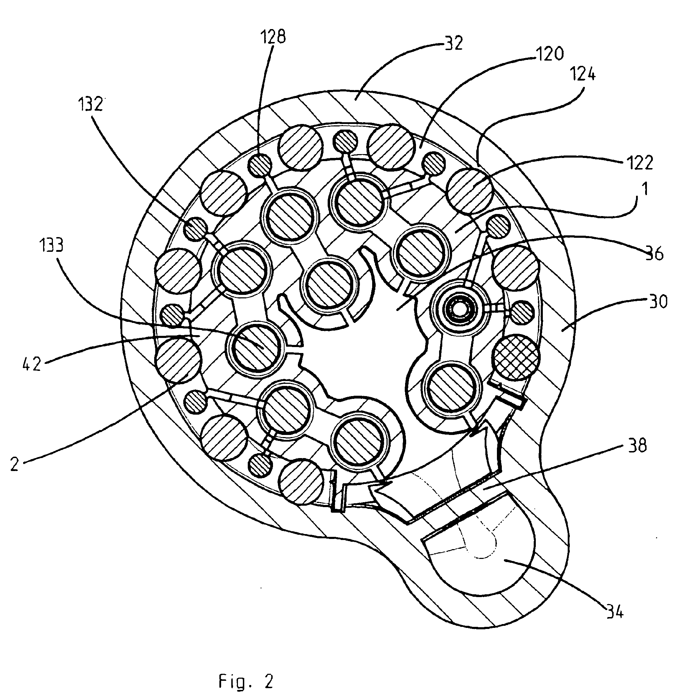

Der Einlaß 24 bildet den in Fig. 1 oberen Teil eines Eingangskanals 34. Der Eingangskanal 34 ist seitlich an das Gehäuse 30 angeformt und über eine Zwischenwand 38 von dem übrigen von der Gehäusewand 32 umschlossenen Raum getrennt (Fig.2). Der Eingangskanal 34 erstreckt sich vom Einlaß 34 bis zu einer Öffnung 40 (Fig.1), die den Eingangskanal 34 mit dem Raum 36 verbindet.

In dem von dem Gehäuse 30 umschlossenen Raum 36 sind vier identische Strömungsleitelemente 42, 44, 46 und 48 vorgesehen. In einem alternativen Ausführungsbeispiel wird ein einziges Strömungsleitelement mit vierfacher Höhe verwendet. Kleiner Strömungsleitelemente sind jedoch leichter und daher kostengünstiger herstellbar.

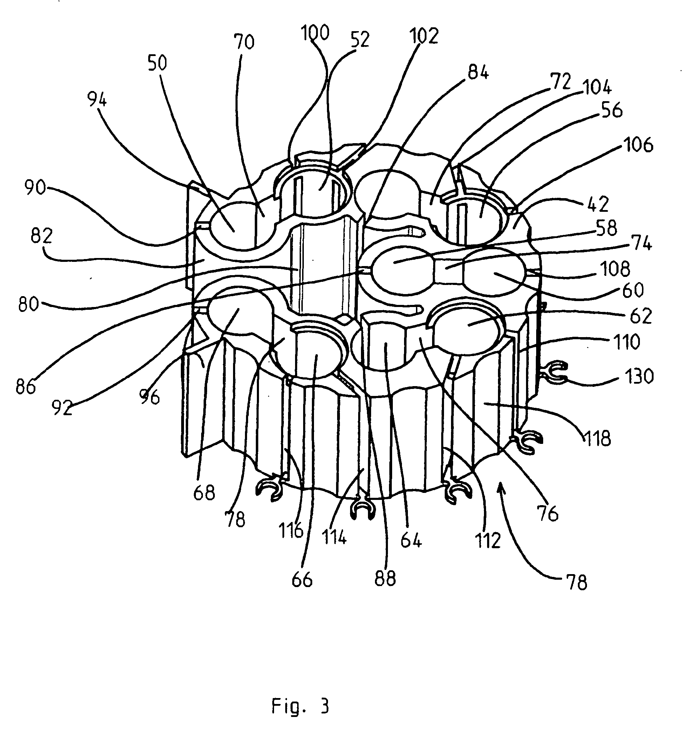

Ein solches Strömungsleitelement 42 ist in Fig. 3 nochmals gesondert dargestellt. Das Strömungsleitelement 42 besteht aus Kunststoff und ist im Spritzgußverfahren hergestellt. Das Strömungsleitelement weist eine im wesentlichen zylinderförmige Grundform auf. In dieser Grundform sind ebenfalls zylinderförmige Hohlräume 50, 52, 54, 56, 58, 60, 62, 64, 66 und 68 vorgesehen. Die Hohlräume 50, 52, 54, 56, 60, 62, 64, 66 und 68 sind im wesentlichen kranzförmig am äußeren Rand der Grundform angeordnet. Der Hohlraum 58 ist etwas weiter innerhalb des Kranzes angeordnet. Die Längsachsen der Hohlräume verlaufen parallel zueinander und parallel zur Längsachse der Grundform.

Jeweils zwei der Hohlräume sind über Spalte miteinander verbunden. Die Hohlräume 50 und 52, bzw. 54 und 56 sind über einen Spalt 70, bzw. 72, der jeweils etwa in Umfangsrichtung verläuft, miteinander verbunden. Hohlräume 58 und 60 sind über einen Spalt 74, der in radialer Richtung verläuft, miteinander verbunden. Hohlräume 62 und 64, bzw. 66 und 68 sind über jeweils einen Spalt 76 bzw. 78, der wiederum in etwa in Umfangsrichtung verläuft, miteinander verbunden.

Der Mittenbereich 80 der Grundform 42 ist ebenfalls als Hohlraum ausgebildet. Der Hohlraum erstreckt sich auf einer Seite 82 bis zum Rand der zylindrischen Grundform 42. Die zylindrischen Hohlräume 54, 58 und 64 sind mit dem Hohlraum 80 im Mittenbereich über schmale Spalte 84, 86 und 88 verbunden. Die Hohlräume 50 und 68 sind über schmale Spalte 90 und 92 mit dem an der Seite 82 befindlichen Rand der Grundform 42 verbunden.

Der Randbereich an der Seite 82 ist durch Stege 94 und 96, die in radialer Richtung an die Grundform 42 angeformt sind, von dem übrigen Randbereich 98 über die gesamte Länge der Grundform getrennt. Spalte 100 und 102 am Rand der Grundform 42 verbinden den Hohlraum 52 mit dem außerhalb der Grundform 42 gelegenen Außenraum. Ebenso verbinden Spalte 104 und 106 den Hohlraum 56 und Spalt 108 den Hohlraum 60 mit dem Außenraum. Spalte 110 und 112 verbinden den Außenraum mit Hohlraum 62 und Spalte 114 und 16 verbinden den Hohlraum 66 mit dem Außenraum. Das gesamte Strömungsleitelement ist spiegelsymmetrisch zu einem durch den Durchbruch und die Hohlräume 58 und 60 verlaufenden Durchmesser.

Der Umfang der Grundform 42 weist weiterhin Mulden 118 auf, die sich über die gesamte Länge erstrecken und gleichmäßig über den gesamten Umfang verteilt sind. Die Mulden 118 sind jeweils zwischen zwei Spalten, welche die Hohlräume mit dem Außenraum verbinden, angeordnet.

In Fig.2 ist dargestellt, wie das Strömungsleitelement 42 in dem Gehäuse 30 sitzt. Zwischen dem Strömungsleitelement 42 und der Gehäusewand 32 ist ein Zwischenraum 120. Der Zwischenraum 120 stellt eine Nachbehandlungskammer dar, die sich über die gesamte Höhe der Anordnung erstreckt. In der Nachbehandlungskammer sind in gleichmäßigen Abständen zehn Graphitelektroden 122 angeordnet. Wie die Mulden 118 im Strömungsleitelement 42 sind auch Mulden 124 in der Innenseite der Gehäusewand 32 vorgesehen. Die Mulden liegen sich jeweils gegenüber. Die Elektroden 122 sitzen jeweils in den Mulden 118 und 124 und werden so in ihrer Lage gehalten. Auf diese Weise braucht keine weitere Befestigung für die Elektroden vorgesehen werden. Durch die Elektroden 122 wird die Nachbehandlungskammer 120 in neun Unterkammern unterteilt, die nur an ihrem oberen Ende im Gehäusedeckel, dessen Innenraum 126 (Fig.1) gleichzeitig den Auslaß bildet, verbunden sind. Über die Höhe der Strömungsleitelemente sind die Unterkammem jedoch nicht miteinander verbunden. Jeweils ein Spalt aus der Behandlungskammer mündet in einer Unterkammer der Nachbehandlungskammer 120.

In jeder Unterkammer der Nachbehandlungskammer 120 ist ein Stift 128 parallel zu den Elektroden angeordnet. Der Stift 128 ist zylindrisch und sitzt in etwa in der Mitte zwischen den Elektroden. Der Stift 128 dient der Verbesserung der Strömungsverhältnisse und wirkt sich positiv auf das Kristallwachstum aus. Der Stift 128 hat einen kleineren Durchmesser als die Breite des Zwischenraums 120 zwischen dem Strömungsleitelement 42 und der Gehäusewand 30. Das Wasser kann also daran vorbeifließen. Jeder Stift 128 wird von einem halbringförmigen Befestigungselement 130 gehalten, das an das Strömungsleitelement 42 angeformt ist (Fig.3).

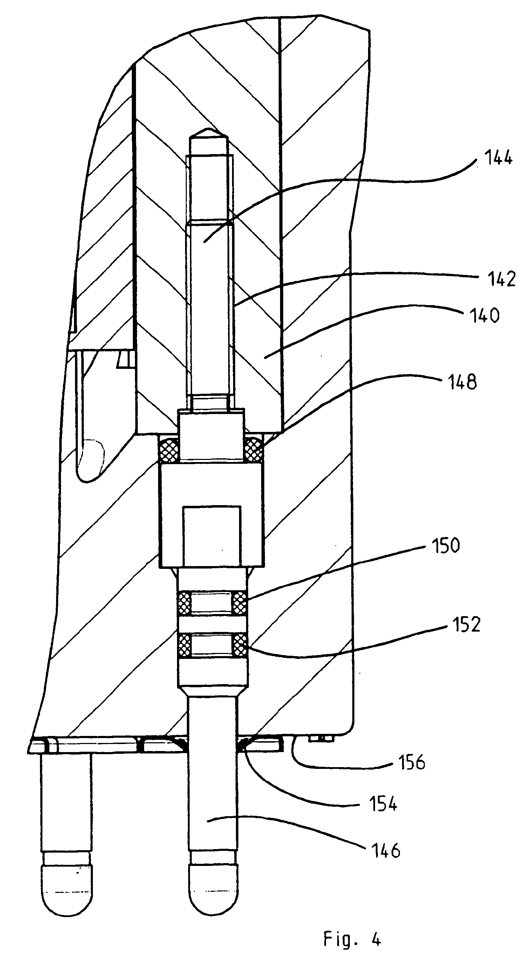

Die Befestigung der Elektroden ist in Fig. 4 nochmals im Detail dargestellt. Die Elektrode 140 (nicht vollständig dargestellt) weist eine Gewindebohrung 142 auf, in welche ein Metallstift 144 eingeschraubt ist. Der Metallstift 144 mündet an dem Kontakt 146. Dichtringe 148, 150 und 152 sind um den Metallstift herum vorgesehen. Weiterhin ist eine Dichtung 154 unterhalb des Gehäusebodens 156 der Behandlungsvorrichtung vorgesehen. Zum Herausnehmen der Elektrode wird der Deckel 26 des Gehäuses 30 abgenommen und die Graphitelektrode von oben herausgeschraubt. Die Elektrode kann dann leicht inspiziert, gereinigt oder ersetzt werden, ohne daß die elektrische Kontaktierung davon beeinflußt wird.

Die beschriebene Anordnung arbeitet wie folgt:
Das zu behandelnde Wasser fließt vom Stutzen 18 des Kanalkörpers zum Einlaß 24 in dem Anschlußstutzen 20. Vom Einlaß 24 fließt das Wasser durch den Einlaßkanal 34 nach unten durch die Öffnung 40 in den mittleren Bereich 80 der Strömungsleitelemente 42. Von dort aus verteilt sich das Wasser über die Spalte 84, 86, 88, 90 und 92 in den Behandlungskammern, in denen jeweils Elektrodenpaare sitzen. Durch die geringen Ausmaße der Zwischenräume und Spalte tritt hier eine erhöhte Strömungsgeschwindigkeit in horizontaler Richtung in Fig.1, d.h. quer zur Längsachse der Elektroden auf.
Die Elektrodenpaare, d.h. jeweils eine als Kathode und eine als Anode gepolte Graphitelektrode 131 und 133, sind mit einer Spannung beaufschlagt, die für die Kristallkeimbildung ausreicht. Die Kristallkeime bilden sich in dem inhomogenen Feld zwischen den Elektroden an der Kathode. Die Elektroden werden alle 60 Sekunden umgepolt. Dadurch setzt sich der geringe Zwischenraum nicht zu und die Elektroden werden gleichmäßig beansprucht. Die gebildeten Kristallkeime werden mit dem Wasser durch die weiteren Spalte, z.B. Spalt 102 in eine Unterkammer der Nachbehandlungskammer 120 gespült. In dem Feld zwischen den abwechselnd als Anode und Kathode gepolten Elektroden wachsen die Keime weiter. Auch diese Elektroden werden in Abständen von 60 Sekunden umgepolt. Das Wasser fließt nun in vertikaler Richtung in Fig.1 nach oben zu einem von dem Gehäusedeckel 26 gebildeten Hohlraum 126. Der Hohlraum 126 ist mit einem Auslaß 132, der in den Anschlußstutzen 22 des Kanalkörpers mündet, verbunden.

## Patentansprüche

1. Gerät zur Wasserbehandlung mittels eines elektrischen Feldes mit Anoden- und Kathodenmitteln in einer von dem zu behandelnden Wasser durchflossenen Behandlungskammer, **dadurch gekennzeichnet, daß**
(a) die Behandlungskammer wenigstens ein Paar langgestreckter Hohlräume bildet, die über einen Spalt miteinander verbunden sind,
(b) die Anoden- und Kathodenmittel jeweils von einem Paar von zueinander parallelen, stabförmigen Elektroden gebildet sind, die sich im Abstand voneinander durch die langgestreckten Hohlräume erstrecken, wobei zwischen die Elektroden eine Spannung anlegbar ist, und
(c) das eine Ende des oderjedes Hohlräumes mit einem Wassereinlaß und das andere Ende des oder jedes Hohlraumes mit einem Wasserauslaß verbunden ist, wodurch eine Wasserströmung von einer Elektrode zur anderen im wesentlichen quer zur Längsachse der Elektroden erzeugbar ist.

2. Gerät nach Anspruch 1, **dadurch gekennzeichnet, daß** die Elektrodenpaare aus Kathode und Anode jeweils paarweise gegen anderen Elektrodenpaare isoliert sind.

3. Gerät nach Anspruch 1 oder 2, **dadurch gekennzeichnet, daß** die Elektrodenpaare im wesentlichen kranzförmig angeordnet sind.

4. Gerät nach einem der vorgehenden Ansprüche, **dadurch gekennzeichnet, daß** 5 Elektrodenpaare vorgesehen sind.

5. Gerät nach einem der vorgehenden Ansprüche, **dadurch gekennzeichnet, daß** es ein im wesentlichen topfförmiges Gehäuse umfasst.

6. Gerät nach einem der vorgehenden Ansprüche, **dadurch gekennzeichnet, daß** ein Strömungsleitelement vorgesehen ist, in welchem sich die zylinderförmigen Hohlräume zur Aufnahme der Elektroden befinden.

7. Gerät nach Anspruch 6, **dadurch gekennzeichnet, daß** die Elektroden in den miteinander verbundenen Hohlräumen jeweils entgegengesetzt gepolt sind.

8. Gerät nach Anspruch 7, **dadurch gekennzeichnet, daß** jeweils ein Hohlraum eines Hohlraumpaares über wenigstens einen Spalt mit dem Auslaß und der andere Hohlraum über wenigstens einen Spalt mit einem Einlaß der Behandlungskammer verbunden ist.

9. Gerät nach einem der Ansprüche 6 bis 9, **dadurch gekennzeichnet, daß** das Strömungsleitelement aus elektrisch isolierendem Material besteht.

10. Gerät nach Anspruch 9, **dadurch gekennzeichnet, daß** das Strömungsleitelement aus Kunststoff besteht.

11. Gerät nach Anspruch 10, **dadurch gekennzeichnet, daß** das Strömungsleitelement im Spritzgußverfahren herstellbar ist.

12. Gerät nach einem der vorgehenden Ansprüche, **dadurch gekennzeichnet, daß** die Elektroden aus Graphit bestehen.

13. Gerät nach einem der vorgehenden Ansprüche, **gekennzeichnet durch** Mittel zur Umpolung der Elektroden.

14. Gerät nach Anspruch 13, **gekennzeichnet durch** Mittel zur Steuerung der Umpolung in regelmäßigen Zeitintervallen.

15. Gerät nach Anspruch 14, **dadurch gekennzeichnet, daß** das Zeitintervall zwischen 0,5 und 2 Minuten lang ist.

16. Gerät nach einem der Ansprüche 6 bis 15, **dadurch gekennzeichnet, daß** eine Mehrzahl von Strömungsleitelementen in einem Gehäuse anordnenbar sind.

17. Gerät nach einem der vorgehenden Ansprüche, **dadurch gekennzeichnet, daß** eine weitere Behandlungskammer mit Elektroden zur Nachbehandlung vorgesehen ist.

18. Gerät nach Anspruch 17, **dadurch gekennzeichnet, daß** die weitere Behandlungskammer ringförmig um die Behandlungskammer angeordnet ist.

19. Gerät nach Anspruch 18, **dadurch gekennzeichnet, daß** in der Nachbehandlungskammer Elektroden kranzförmig in gleichmäßigen Abständen angeordnet sind.

20. Gerät nach einem der Ansprüche 17 bis 19, **dadurch gekennzeichnet, daß** das oder jedes Elektrodenpaar in einer eigenen Behandlungskammer angeordnet ist und jede dieser Behandlungskammern mit der Nachbehandlungskammer in Verbindung steht.

21. Gerät nach einem der Ansprüche 17 bis 20, **dadurch gekennzeichnet**, da zwischen den Elektroden in der Nachbehandlungskammer isolierende Stifte vorgesehen sind, die parallel zu den Elektroden verlaufen.

22. Gerät nach Anspruch 21, soweit er auf Anspruch 6 zurückbezogen ist, **dadurch gekennzeichnet, daß** Befestigungselemente zur Befestigung der isolierenden Stifte an dem Strömungsleitelement vorgesehen sind.

## Claims

1. Apparatus for water treatment by means of an electrical field with anode and cathode means in a treatment chamber wherein the water to be treated passes through,
**characterised in that**
(a) the treatment chamber forms a pair of elongated hollow spaces which are interconnected by a slit,
(b) the anode and cathode means each are formed by a pair of parallel, pin-shaped electrodes which extend spaced apart in said space and a voltage is applicable between the electrodes, and
(c) one end of the or of each hollow space is connected to a water inlet and the other end of the or of each hollow space is connected to a water outlet, whereby a waterflow from one electrode to the other is adapted to be generated which is essentially transverse to the longitudinal axis of the electrodes.

2. Apparatus according to claim 1, **characterised in that** the pairs of electrodes consisting of a cathode and an anode are pair-wise isolated from further pairs of electrodes.

3. Apparatus according to claim 1 or 2, **characterised in that** the pairs of electrodes are arranged essentially in the shape of a ring.

4. Apparatus according to any of the foregoing claims, **characterised in that** five pairs of electrodes are provided.

5. Apparatus according to any of the foregoing claims, **characterised in that** it comprises a housing with an essentially pot-like shape.

6. Apparatus according to any of the foregoing claim **characterised in that** a flow guiding element is provided with cylinder-shaped hollow spaces for receiving the electrodes.

7. Apparatus according to claim 6, **characterised in that** the electrodes in the hollow spaces which are connected to each other are oppositely charged, respectively.

8. Apparatus according to claim 7, **characterised in that** one hollow space of the pair of hollow spaces is connected to the outlet via a slit and the other hollow space is connected via at least one slit with the inlet of the treatment chamber.

9. Apparatus according to any of claims 6 to 8, **characterised in that** the flow guiding element consists of an electrically isolating material.

10. Apparatus according to claim 9, **characterised in that** the flow guiding element consists of plastic material.

11. Apparatus according to claim 10, **characterised in that** the flow guiding element is produced with injection moulding.

12. Apparatus according to any of the foregoing claims, **characterised in that** the electrodes consist of graphite.

13. Apparatus according to any of the foregoing claims, **characterised by** means for changing the polarity of the electrodes.

14. Apparatus according to claim 13, **characterised by** means for controlling the changes of the polarity at regular time intervals.

15. Apparatus according to claim 14, **characterised in that** the duration of the time interval is between 0,5 and 2 minutes.

16. Apparatus according to any of claims 6 to 15, **characterised in that** a plurality of flow guiding elements is arranged in one housing.

17. Apparatus according to any of the foregoing claims, **characterised in that** a further treatment chamber with electrodes is provided for a after treatment.

18. Apparatus according to claim 17, **characterised in that** the further treatment chamber is circularly arranged around the treatment chamber.

19. Apparatus according to claim 18, **characterised in that** in the treatment chamber for the after treatment the electrodes are arranged in a ring with even spaces in between.

20. Apparatus according to any of claims 17 to 19, **characterised in that** the pair of electrodes or pairs of electrodes are each arranged in their own treatment chambers and each of these treatment chambers is connected to the further treatment chamber for the after treatment.

21. Apparatus according to any of claims 17 to 20, **characterised in that** isolating pins are provided between the electrodes in the treatment chamber for the after treatment, which extend parallel to the electrodes.

22. Apparatus according to claim 21 referring to claim 6, **characterised in that** fixing elements are provided for fixing of the isolating pins to the flow guiding element.

## Revendications

1. Appareil pour le traitement de l'eau au moyen d'un champ électrique présentant des moyens d'anode et de cathode disposés dans une chambre de traitement traversée par l'eau à traiter, **caractérisé en ce que**
(a) la chambre de traitement forme au moins une paire d'espaces creux allongés qui communiquent entre eux par l'intermédiaire d'une fente,
(b) chacun des moyens d'anode et de cathode est formé par une paire d'électrodes en forme de bâton, parallèles l'une à l'autre, qui traversent les espaces creux allongés en étant écartées l'une de l'autre, une tension pouvant être appliquée entre les électrodes, et
(c) l'une des extrémités de l'espace creux ou de chaque espace creux communique avec une admission d'eau et l'autre extrémité de l'espace creux ou de chaque espace creux communique avec une sortie d'eau, ceci permettant de générer un courant d'eau d'une électrode à l'autre essentiellement diagonalement par rapport à l'axe longitudinal des électrodes.

2. Appareil selon la revendication 1, **caractérisé en ce que** les paires d'électrodes se composant d'une cathode et d'une anode sont isolées par paire par rapport aux autres paires d'électrodes.

3. Appareil selon la revendication 1 ou 2, **caractérisé en ce que** les paires d'électrodes sont disposées essentiellement en couronne.

4. Appareil selon l'une quelconque des revendications précédentes, **caractérisé en ce que** 5 paires d'électrodes sont prévues.

5. Appareil selon l'une quelconque des revendications précédentes, **caractérisé en ce qu'**il comprend un boîtier essentiellement en forme de pot.

6. Appareil selon l'une quelconque des revendications précédentes, **caractérisé en ce qu'**il est prévu un élément conducteur de courant dans lequel se trouvent les espaces creux cylindriques destinés à loger les électrodes.

7. Appareil selon la revendication 6, **caractérisé en ce que** les électrodes situées dans les espaces creux reliés les uns aux autres présentent pour chacune d'elles une polarité contraire.

8. Appareil selon la revendication 7, **caractérisé en ce que** l'un des espaces creux d'une paire d'espaces creux est relié à chaque fois à la sortie par l'intermédiaire d'au moins une fente et que l'autre espace creux est relié à l'admission de la chambre de traitement par l'intermédiaire d'au moins une fente.

9. Appareil selon l'une quelconque des revendications 6 à 9, **caractérisé en ce que** l'élément conducteur de courant se compose d'un matériau isolant le courant électrique.

10. Appareil selon la revendication 9, **caractérisé en ce que** l'élément conducteur de courant se compose de matière plastique.

11. Appareil selon la revendication 10, **caractérisé en ce que** l'élément conducteur de courant peut être fabriqué par moulage par injection.

12. Appareil selon l'une quelconque des revendications précédentes, **caractérisé en ce que** les électrodes se composent de graphite.

13. Appareil selon l'une quelconque des revendications précédentes, **caractérisé par** des moyens pour l'inversion de la polarité des électrodes.

14. Appareil selon la revendication 13, **caractérisé par** des moyens pour la commande de l'inversion de la polarité à des intervalles de temps réguliers.

15. Appareil selon la revendication 14, **caractérisé en ce que** l'intervalle de temps est compris entre 0,5 et 2 minutes.

16. Appareil selon l'une quelconque des revendications 6 à 15, **caractérisé en ce que** plusieurs éléments conducteurs de courant peuvent être disposés dans un boîtier.

17. Appareil selon l'une quelconque des revendications précédentes, **caractérisé en ce qu'**il est prévu une chambre de traitement supplémentaire munie d'électrodes destinées au retraitement.

18. Appareil selon la revendication 17, **caractérisé en ce que** la chambre de traitement supplémentaire est disposée circulairement autour de la chambre de traitement.

19. Appareil selon la revendication 18, **caractérisé en ce que** des électrodes sont disposées en couronne à des écarts réguliers dans la chambre de retraitement.

20. Appareil selon l'une quelconque des revendications 17 à 19, **caractérisé en ce que** la paire d'électrodes ou chaque paire d'électrodes est disposée dans sa propre chambre de traitement et que chacune de ces chambres de traitement communique avec la chambre de retraitement.

21. Appareil selon l'une quelconque des revendications 17 à 20, **caractérisé en ce que** des tiges isolantes s'étendant parallèlement aux électrodes sont prévues entre les électrodes dans la chambre de retraitement.

22. Appareil selon la revendication 21, dans la mesure où elle se rapporte à la revendication 6, **caractérisé en ce que** des éléments de fixation sont prévus afin de fixer les tiges isolantes sur l'élément conducteur de courant.
